# EUROPÄISCHE PATENTANMELDUNG

(11) **EP 2 764 937 A2**
(43) Veröffentlichungstag der Anmeldung: **13.08.2014**
(21) Anmeldenummer: 13196297.9
(22) Anmeldetag: 09.12.2013
(51) Int. Cl.: B23C 3/06

(54) **Innenfräser**

(30) Priorität: 11.02.2013 DE 102013101311
(71) Anmelder: KENNAMETAL INC., Latrobe, PA 15650 (US)
(72) Erfinder: Heinloth, Markus, 92353 Postbauer-Heng (DE); Bär, Jürgen, 90765 Fürth (DE); Grünler, Jan, 91572 Königshofen an der Heide (DE)
(74) Vertreter: Prinz & Partner

(57) **Zusammenfassung**

Ein Innenfräser zur Erzeugung einer in einem Radius auslaufenden Vertiefung in einem Werkstück, insbesondere zum Fräsen einer Kurbelwelle, hat einen Werkzeughalter (10) mit lösbar an diesem angebrachten Wechselschneideinsätzen (16, 18). Zur Erzeugung des Radius sind mehrere erste Wechselschneideinsätze (16) vorgesehen, die in Schnittrichtung (S) nacheinander angeordnet sind und die Schneidkanten (28) haben, die sich ergänzende Abschnitte des Radius erzeugen, wobei die ersten Wechselschneideinsätze (16) zur Erzeugung des Radius identisch ausgebildet sind.

## Beschreibung

Die Erfindung betrifft einen Innenfräser zur Erzeugung einer in einem Radius auslaufenden Vertiefung in einem Werkstück, mit einem Werkzeughalter und lösbar daran angebrachten Wechselschneideinsätzen, wobei zur Erzeugung des Radius mehrere erste Wechselschneideinsätze in Schnittrichtung nacheinander angeordnet sind, die Schneidkanten haben, die sich ergänzende Abschnitte des Radius erzeugen.

Ein Innenfräser ist ein ringförmiger Fräser, an dessen Innenumfang etliche Schneiden angeordnet sind, die meist an Wechselschneideinsätzen vorgesehen sind. Zur Bearbeitung des Werkstücks wird der rotierende Ring im Raum so bewegt, dass der Innenumfang des Rings im zu bearbeitenden Bereich des Werkstücks radial nach innen bewegt wird, damit die Schneidkanten eine Vertiefung im Werkstück schneiden können.

Innenfräser werden beispielsweise bei der Herstellung von Kurbelwellen zur Bearbeitung der Lagersitze eingesetzt. Es können sowohl die Sitze für die Hauptlager als auch für die Hublager bearbeitet werden. Innenfräser werden dabei etwa zum Schruppen verwendet, um überschüssiges Material auf im Wesentlichen die endgültigen gewünschten Maße abzutragen.

Bei exzentrisch gelagerten Werkstücken, beispielsweise den Hublagern einer Kurbelwelle, kann sich der Innenfräser zusätzlich zu seiner zur Erzeugung der Schneidkraft erforderlichen Eigenrotation um den Mittelpunkt des Fräsers in einer Kreisbahn um das Werkstück bewegen, um dieses auf seinem gesamten Umfang zu bearbeiten. Mit einer entsprechenden Steuerung ist es möglich, auch das Werkstück in einer exzentrischen Bewegung rotieren zu lassen, um den Fräsprozess zu unterstützen.

Am Innenumfang des Fräsers sind meist mehrere Gruppen von Wechselschneideinsätzen angebracht. Jeder der Wechselschneideinsätze ist für die Fertigung eines spezifischen axialen Abschnitts der vom Fräser in das Werkstück geschnittenen Vertiefung zugeordnet.

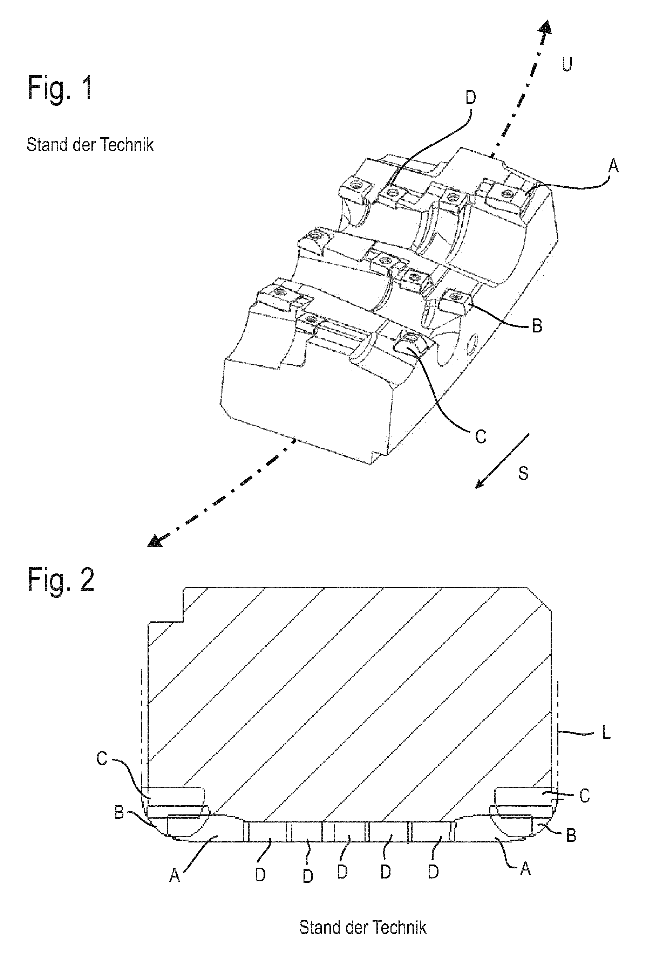

Für einen aus dem Stand der Technik bekannten Innenfräser ist dies in den Figuren 1 und 2 dargestellt. Figur 1 zeigt einen Abschnitt eines Werkzeughalters des Innenfräsers, der mit einer Gruppe von Wechselschneideinsätzen A - D bestückt ist, die den in Figur 2 dargestellten, ins Werkstück geschnittenen Umfang (siehe Linie S) erzeugt.

Die in Figur 1 gezeigte Gruppe von Schneideinsätzen A - D wiederholt sich in identischer Zusammensetzung und Ausrichtung entlang des Umfangs des Fräsers. Die exakte Anzahl von Schneideinsätzen in einer solchen Gruppe sowie die Anzahl der Gruppen über den Umfang des Fräsers sind selbstverständlich abhängig vom zu bearbeitenden Werkstück und insbesondere den Dimensionen des Innenfräsers.

Die in Figur 2 im Querschnitt gezeigte, vom Fräser ins Werkstück geschnittene Umfangsfläche mit der Umfangslinie L ergibt sich durch Zusammensetzung der Schneidkanten der Gruppe von Wechselschneideinsätzen A - D aus Figur 1 in Umfangsrichtung des Werkzeughalters gesehen. In Figur 2 sind sämtliche Schneideinsätze A - D zeichnerisch von ihrer axialen Position in eine Radialebene gedreht. Dadurch ist die zusammengesetzte Schnittlinie aller Wechselschneideinsätze der gezeigten Gruppe erkennbar.

In Figur 2 ist zu sehen, dass die vom Innenfräser erzeugte Vertiefung an beiden Seiten, die den Umfangsrändern des Innenfräsers entsprechen, in einem Radius mit definierter Krümmung ausläuft. Dieser Radius wird durch das Zusammenspiel von mehreren Wechselschneideinsätzen A, B, C erzeugt. In diesem Fall wird der Radius jeweils von Schneidkanten an drei einzelnen Schneideinsätzen A, B, C geschnitten. Beim Zustellen in Radialrichtung des Werkzeugs in Schnittrichtung S kommt beispielsweise zunächst der Wechselschneideinsatz A in Kontakt mit dem Werkstück, dann die seitlich außen liegende Schneidkante des Wechselschneideinsatzes B und zuletzt die seitlich außen liegende Schneidkante des Wechselschneideinsatzes C. Zusammen wird die in Figur 1 für den Radius gezeigte Kontur L von den Wechselschneideinsätzen geschnitten.

Der Radius ist hier auf beiden Umfangsseiten des Innenfräsers identisch, aber natürlich spiegelbildlich ausgebildet.

Alle drei Wechselschneideinsätze A, B, C sind von ihrer Geometrie und Größe her unterschiedlich ausgebildet. Drei verschiedene Typen von Wechselschneideinsätzen kommen also allein zur Erzeugung des Radius zum Einsatz.

Den zwischen den beiden Radien liegenden Abschnitt der vom Innenfräser in das Werkstück geschnittenen Linie erzeugen fünf Wechselschneideinsätze D eines weiteren Typs, die wiederum eine andere Gestalt haben als die Wechselschneideinsätze A, B und C.

Aufgabe der Erfindung ist es, einen Innenfräser mit Wechselschneideinsätzen einfacher und kostengünstiger zu gestalten.

Erfindungsgemäß wird dies erreicht mit einem Innenfräser zur Erzeugung einer in einem Radius auslaufenden Vertiefung in einem Werkstück, insbesondere zum Fräsen einer Kurbelwelle, mit einem Werkzeughalter und lösbar daran angebrachten Wechselschneideinsätzen, wobei zur Erzeugung des Radius mehrere erste Wechselschneideinsätze in Schnittrichtung nacheinander angeordnet sind, die Schneidkanten haben, die sich ergänzende Abschnitte des Radius erzeugen, wobei die ersten Wechselschneideinsätze zur Erzeugung des Radius identisch ausgebildet sind, das heißt, es werden Gleichteile verwendet. Im Gegensatz zu den bisher bekannten Lösungen sind also nicht mehrere Typen von Wechselschneideinsätzen zur Erzeugung des Radius erforderlich, sondern sämtliche einzelnen Abschnitte des Radius werden mit identischen Wechselschneideinsätzen geschnitten. Diese Wechselschneideinsätze können im Werkzeughalter in unterschiedlichen Positionen und Orientierungen angeordnet sein, um sich zum gewünschten Radius zu ergänzen.

Vorzugsweise wird der Radius durch zwei erste Wechselschneideinsätze mit sich ergänzenden Schneidkanten erzeugt. Die Reduktion auf exakt zwei Wechselschneideinsätze bedeutet gegenüber dem Stand der Technik eine Einsparung eines Wechselschneideinsatzes.

Die beiden den Radius bildenden ersten Wechselschneideinsätze sind vorzugsweise an einem der Umfangsränder des Werkzeughalters angeordnet und sind insbesondere die axial am weitesten außen und seitlich liegenden, am Werkzeughalter vorhandenen Wechselschneideinsätze.

Die ersten Wechselschneideinsätze sind bevorzugt scheibenförmig ausgebildet und sind mit einer ihrer Stirnseiten im Wesentlichen senkrecht zur Schnittrichtung ausgerichtet. So lässt sich der Umfangsrand als Schneidkante einsetzen. Außerdem kann der Wechselschneideinsatz sehr symmetrisch gestaltet werden, was es ermöglicht, viele Schneidkanten daran auszubilden.

Die Befestigung des Wechselschneideinsatzes am Werkzeughalter erfolgt vorzugsweise so, dass eine zentrale Befestigungsschraube in etwa parallel zur Umfangsrichtung am Werkzeughalter angreift und nicht, wie bei herkömmlichen Lösungen, die Befestigungsöffnung und die Befestigungsschraube im Wesentlichen parallel zur Radialrichtung des Innenfräsers ausgerichtet sind.

Eine derartige Orientierung bietet beispielsweise, bedingt durch die Geometrie des Wechselschneideinsatzes, den Vorteil, dass bei dessen Herstellung aus einem Sintermaterial beim Pressen in einem Presswerkzeug die Form der Stirnflächen im Wesentlichen bereits im Presswerkzeug festgelegt werden kann. Auf diese Weise kann etwa ein positiver Spanwinkel gegenüber dem Werkstück im montierten Zustand des Wechselschneideinsatzes erreicht werden, ohne dass eine wesentliche Nachbearbeitung nach der Sinterung des Wechselschneideinsatzes erfolgen muss.

Eine geeignete Geometrie für die ersten Wechselschneideinsätze ist beispielsweise eine solche, die gerundete und gerade Umfangsschnitte aufweist, insbesondere eine kreisförmige Scheibe mit flachen Umfangsabschnitten.

Gerundete und gerade Abschnitte entlang des Umfangs des Wechselschneideinsatzes wechseln sich vorzugsweise ab. Beispielsweise können jeweils drei gerundete und drei gerade Abschnitte vorgesehen sein.

Jeder der gerundeten Abschnitte bildet vorteilhaft eine Schneidkante, sodass ein derartiger Wechselschneideinsatz zumindest drei Schneidkanten aufweist, wenn er als Wendeschneideinsatz ausgebildet ist, sogar sechs Schneidkanten.

Durch die symmetrischere Form im Vergleich zu den bisher verwendeten Wechselschneideinsätzen zur Erzeugung des Radius lässt sich eine höhere Anzahl von Schneidkanten pro Schneideinsatz realisieren.

Am Werkzeughalter ist vorteilhaft wenigstens eine Anlagefläche zur Positionierung und Indexierung des Wechselschneideinsatzes vorgesehen, wobei insbesondere die Anlagefläche an einem geraden Umfangsabschnitt anliegen kann. Über Position und Orientierung der Anlageflächen lässt sich auf einfache Weise die exakte Positionierung und Orientierung der ersten Wechselschneideinsätze zur Erzeugung des Radius vorgeben, sodass deren Schneidkanten stets in exakt der Position sind, die notwendig ist, um den entsprechenden Abschnitt des Radius zu formen.

Wenn die Umfangsgeometrie der ersten Wechselschneideinsätze symmetrisch gestaltet ist, lassen sich die Anlageflächen auch gleichzeitig zur Indexierung des Wechselschneideinsatzes einsetzen.

Es ist vorteilhaft, wenn die gerundeten Abschnitte der ersten Wechselschneideinsätze jeweils eine Krümmung aufweisen, die dem zu erzeugenden Radius entspricht. Die geraden Abschnitte, die die gekrümmten Abschnitte begrenzen, begrenzen vorzugsweise auch gleichzeitig das vom jeweiligen ersten Wechselschneideinsatz geschnittene Radiussegment.

Seitlich zu den ersten Wechselschneideinsätzen können weitere, zweite Wechselschneideinsätze am Werkzeughalter vorgesehen sein, um an den Radius angrenzende Abschnitte der Vertiefung in das Werkstück zu schneiden, vorzugsweise wobei alle zweiten Wechselschneideinsätze identisch ausgebildet sind. Die Geometrie der zweiten Wechselschneideinsätze ist jedoch normalerweise verschieden von der Geometrie der ersten Wechselschneideinsätze. Vorzugsweise werden als zweite Wechselschneideinsätze herkömmliche, scheiben- oder plattenförmige, beispielsweise im Querschnitt viereckige Schneideinsätze, verwendet, die bevorzugt mit ihrer Schmalseite in Schnittrichtung verbaut sind, sodass ihre Stirnseite bezüglich des Innenfräsers radial nach innen zeigt. Auf diese Weise werden insgesamt nur noch zwei unterschiedliche Typen von Wechselschneideinsätzen benötigt.

Es ist möglich, an beiden Umfangsrändern des Werkzeughalters erste Wechselschneideinsätze zur Erzeugung eines Radius anzuordnen, sodass an beiden axialen Enden der Vertiefung im Werkstück ein Radius ausgebildet wird. In diesem Fall sind vorteilhaft die ersten Schneideinsätzen, die den Radius erzeugen, an beiden Umfangsrändern des Werkzeughalters in Schnittrichtung gegeneinander versetzt angeordnet, um eine gleichmäßige Belastung der Wechselschneideinsätze beim Kontakt mit dem Werkstück zu erreichen.

Der Abschnitt der Vertiefung zwischen den beiden Radien kann nur von den zweiten Wechselschneideinsätzen geschnitten werden. Die ersten Wechselschneideinsätze dienen hingegen vorzugsweise ausschließlich zum Schneiden des Radius.

Die beschriebene Gruppe von Wechselschneideinsätzen wiederholt sich normalerweise in identischer Geometrie und Anordnung längs des Umfangs des Werkzeughalters. In einer solchen Gruppe sind z.B. vier erste Wechselschneideinsätze vorgesehen, nämlich zwei an jedem Umfangsrand des Werkzeughalters, sowie z.B. acht zweite Wechselschneideinsätze, die auf der Fläche des Werkzeughalters zwischen den ersten Wechselschneideinsätzen angeordnet sind.

Gemäß einer bevorzugten Ausführungsform umfasst der Werkzeughalter einen Grundkörper und mehrere am Grundkörper lösbar befestigte Kassetten, an denen jeweils wenigstens ein Wechselschneideinsatz befestigt ist. Die Verwendung von Kassetten erlaubt es, einen Austausch von Schneideinsätzen oder Gruppen von Schneideinsätzen schneller durchzuführen und erhöht die Lebensdauer des Innenfräsers.

Vorzugsweise ist jeder der ersten Wechselschneideinsätze an einer austauschbaren Kassette befestigt. So sind insbesondere Ausrichtung und Position des Wechselschneideinsatzes einstellbar, bevor dieser in den Grundkörper eingesetzt wird.

Alternativ ist es natürlich auch möglich, mehrere Wechselschneideinsätze und beispielsweise sogar die gesamte beschriebene Gruppe von ersten und zweiten Wechselschneideinsätzen, auf einer einzigen Kassette anzuordnen, sodass beispielsweise die gesamte Gruppe gemeinsam ausgetauscht werden kann.

Der erfindungsgemäße Innenfräser kann beispielsweise zum Bearbeiten von Kurbelwellen von Schiffsdieselmotoren und insbesondere der Haupt- und Hublager derartiger Kurbelwellen eingesetzt werden. Andere Einsatzzwecke sind selbstverständlich ebenfalls denkbar. Genauso lässt sich die Erfindung für Innenfräser mit kleineren oder größeren Dimensionen verwenden.

Die Erfindung wird nachfolgend anhand eines Ausführungsbeispiels mit Bezug auf die beigefügten Zeichnungen näher beschrieben. In den Zeichnungen zeigen:
- Figur 1 eine schematische perspektivische Ansicht eines Ausschnitts eines Werkzeughalters mit Wechselschneideinsätzen eines herkömmlichen Innenfräsers;
- Figur 2 eine Radialschnittansicht des Werkzeughalters nach Figur 1;
- Figur 3 einen schematischen perspektivischen Ausschnitt eines Werkzeughalters eines erfindungsgemäßen Innenfräsers mit Wechselschneideinsätzen;
- Figur 4 einen vergrößerten Ausschnitt des Werkzeughalters aus Figur 3; und
- Figur 5 eine Radialschnittansicht des Innenfräsers nach Figur 3.

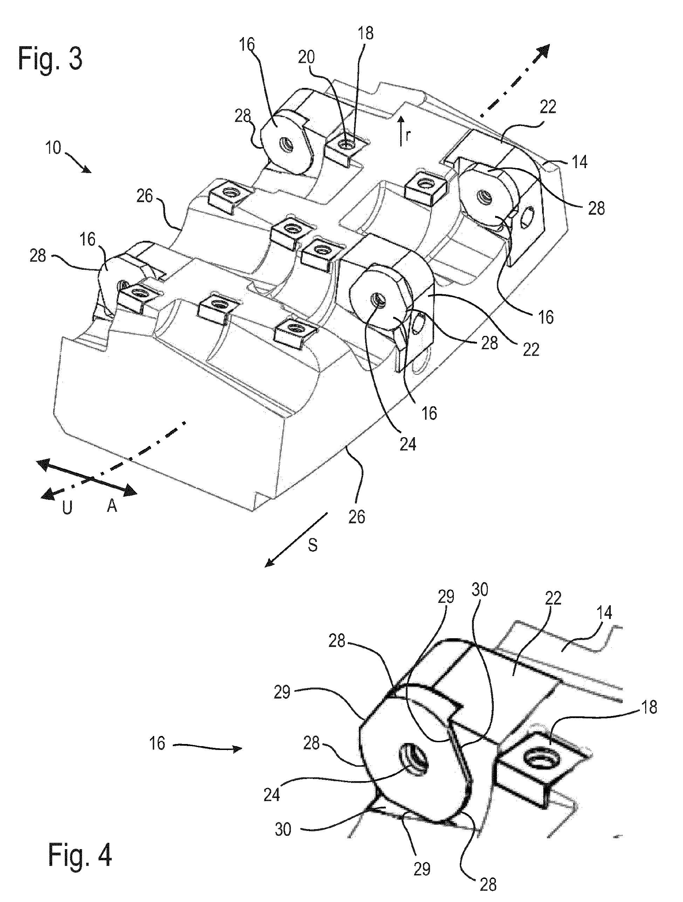

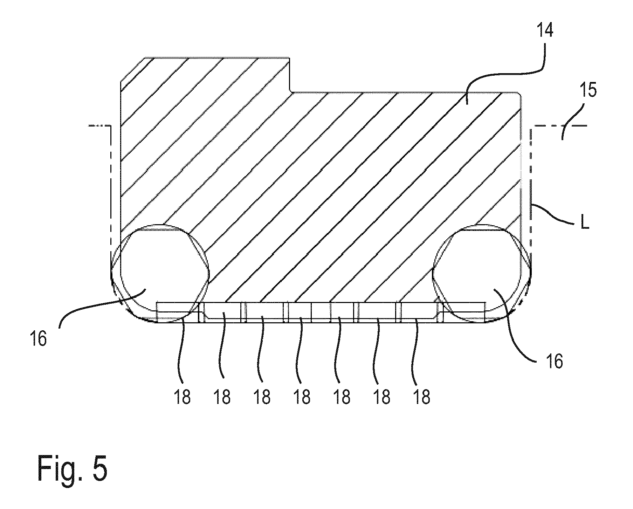

Der in Figur 3 gezeigte Werkzeughalter 10 eines weiter nicht näher dargestellten Innenfräsers besitzt einen Grundkörper 14, der in Form eines in Umfangsrichtung U geschlossenen Rings ausgebildet ist. An seiner radialen Innenseite ist der Werkzeughalter 10 mit Schneideinsätzen bestückt, die dazu dienen, eine Vertiefung in ein Werkstück 15 (siehe Figur 5) zu schneiden. Die Schnittrichtung S wird zum Beispiel durch die Rotationsrichtung des Innenfräsers und somit des Werkzeughalters 10 bestimmt. In dieser Hinsicht entspricht der Innenfräser dem oben in Bezug auf die Figuren 1 und 2 beschriebenen.

Bei dem gezeigten Innenfräser sind jedoch lediglich zwei unterschiedliche Typen von Schneideinsätzen vorgesehen, nämlich Wechselschneideinsätze 16 eines ersten Typs zur Erzeugung des Radius am Rand der Vertiefung und Wechselschneideinsätze 18 eines zweiten Typs, die den Bereich des Werkstücks 15 zwischen den Radien bearbeiten.

In Figur 3 ist eine Gruppe von Wechselschneideinsätzen 16, 18 dargestellt, die alle Schneideinsätze aufweist, die benötigt werden, um jeden Bereich der Vertiefung im Werkstück 15 über die axiale Breite der Vertiefung zu bearbeiten.

Die dargestellte Gruppe wiederholt sich entlang der Umfangsrichtung U des Werkzeughalters 10 mehrfach, wobei der gesamte Umfang U des Werkzeughalters 10 möglichst gleichmäßig mit Schneideinsätzen bestückt ist. Für einen Innenfräser zur Bearbeitung einer Kurbelwelle eines Schiffsdieselmotors sind beispielsweise 18 derartige Gruppen über den Umfang des Innenfräsers verteilt.

In der Gruppe von Wechselschneideinsätzen sind mehrere erste Wechselschneideinsätze 16 (also Wechselschneideinsätze des ersten Typs) entlang der beiden Umfangsränder 26 des Werkzeughalters 10 angeordnet. Außerdem sind mehrere zweite Wechselschneideinsätze 18 (also Wechselschneideinsätze des zweiten Typs) in Axialrichtung A seitlich neben den ersten Wechselschneideinsätzen 16 angeordnet.

In diesem Beispiel sind sämtliche zweiten Wechselschneideinsätze 18 (von denen in der Figur 3 aus Gründen der Übersichtlichkeit nur einer mit Bezugszeichen versehen ist) direkt am Grundkörper 14 befestigt. Die Befestigung erfolgt durch eine durch eine zentrale Öffnung 20 geführte Schraube (hier nicht dargestellt). Die entsprechende Gewindeöffnung im Grundkörper verläuft im Wesentlichen radial.

Alle ersten Wechselschneideinsätze 16 hingegen sind jeweils an einer eigenen Kassette 22 befestigt, ebenfalls über eine durch eine zentrale Öffnung 24 hindurchgreifende Schraube. Die Kassetten 22 sind wiederum mit dem Grundkörper 14 verschraubt (hier nicht näher dargestellt).

Sämtliche Wechselschneideinsätze 16, 18 sind lösbar und austauschbar gestaltet. Auch sämtliche der Kassetten 22 sind lösbar und austauschbar ausgebildet, sodass sowohl einzelne Wechselschneideinsätze 16, 18 beider Typen als auch einzelne Kassetten 22 vom Grundkörper 14 entfernt und wieder dort angebracht werden können.

Die ersten Wechselschneideinsätze 16 dienen zur Erzeugung des Radius, wie bei der in Figur 5 dargestellten, vom Innenfräser in das Werkstück 15 geschnittenen Umrisslinie L verdeutlicht ist. Hierzu sind an jedem Umfangsrand 26 des Werkzeughalters 10 mehrere, hier jeweils zwei, erste Wechselschneideinsätze 16 angeordnet, die sich ergänzende Schneidkanten 28 aufweisen, wobei beide Schneidkanten 28 zusammen den in Figur 5 gezeigten Radius entlang eines Umfangsrands 26 in das Werkstück 15 schneiden.

Die ersten Wechselschneideinsätze 16 sind hier scheibenförmig ausgebildet und mit einer ihrer Stirnseiten in etwa senkrecht zur Schnittrichtung S bzw. zur Umfangsrichtung U ausgerichtet. Die entgegengesetzt gerichtete Stirnseite liegt an der Kassette 22 an.

Jeder Wechselschneideinsatz 16 weist abwechselnd gerundete und gerade Umfangsabschnitte auf, wobei die gerundeten Umfangsabschnitte die Schneidkanten 28 bilden. Die geraden Umfangsabschnitte 29 sind so orientiert, dass sie nicht in Kontakt mit dem Werkstück 15 kommen. Jede der Schneidkanten 28 und jeder der geraden Umfangsabschnitte 29 erstreckt sich in diesem Beispiel über einen Winkel von etwa 60°. Natürlich kann auch eine andere Geometrie der Umfangsabschnitte gewählt werden.

Die beiden Stirnseiten des Wechselschneideinsatzes 16 sind hier identisch ausgebildet, sodass dieser gewendet werden kann und somit sechs verwertbare Schneidkanten 28 aufweist. Die Form ist bei einer Drehung um 120° symmetrisch. Die geraden Umfangsabschnitte 29 können zur Indexierung an Anlageflächen 30 an der Kassette 22 beziehungsweise dem Grundkörper 14 verwendet werden.

Sämtliche zweiten Wechselschneideinsätze 18 sind hingegen in diesem Beispiel wie herkömmliche plattenförmige, im Querschnitt in etwa viereckige Schneideinsätze, die so am Werkzeughalter 10 montiert sind, dass eine der Schmalseiten in Schnittrichtung S zeigt und die beiden Stirnseiten in etwa senkrecht zur Radialrichtung r liegen.

Figur 4 zeigt eine vergrößerte Darstellung einer der Kassetten 22 mit einem ersten Wechselschneideinsatz 16. Hier ist zu erkennen, dass zwei Anlageflächen 30 vorgesehen sind, die einen spitzen Winkel einschließen und an denen jeweils einer der geraden Umfangsabschnitte 29 flächig anliegt. Die rückseitige Stirnseite liegt an der Kassette 22 flächig an. Auf diese Weise ist der erste Wechselschneideinsatz 16 in seiner Position bestimmt, gegen Verdrehung gesichert und in mehreren Bereichen abgestützt. Soll eine andere Schneidkante 28 dieses Wechselschneideinsatzes 16 zum Einsatz kommen, so wird dieser gelöst, um 120° gedreht und wieder verschraubt.

Zur vereinfachten Darstellung sind die Stirnseiten der Wechselschneideinsätze 16 hier plan gezeigt. Es ist jedoch vorteilhaft, auf den Stirnseiten jeweils diverse Spanleitflächen auszubilden beziehungsweise Vertiefungen vorzusehen, die die Form der Schneidkanten 28 so definieren, dass ein gewünschter positiver Schnittwinkel zum Werkstück 15 erreicht wird.

Die Krümmung der Schneidkanten 28 entspricht der Krümmung des zu erzeugenden Radius im Werkstück 15. In diesem Beispiel bildet jede der Schneidkanten 28 einen Kreisbogen.

Der Radius wird von zwei entlang des Umfangs des Werkzeughalters 10 direkt hintereinander angeordneten ersten Wechselschneideinsätzen 16 geschnitten. Bei der in Figur 3 gezeigten Gruppe von Schneideinsätzen gerät am in Figur 3 rechtsseitigen Umfangsrand 26 zunächst der untere der beiden ersten Wechselschneideinsätze 16 mit seiner aktiven, oben liegenden Schneidkante 28 in Kontakt mit dem Werkstück 15 und schneidet den bezüglich der Vertiefung im Werkstück 15 unteren Teil des Radius. Anschließend kommt der obere der beiden ersten Wechselschneideinsätze 16 in Kontakt mit dem Werkstück 15 und schneidet den bezüglich der Vertiefung im Werkstück 15 angrenzenden, unteren Teil des Radius mit seiner aktiven Schneidkante 28. Die beiden aktiven Schneidkanten 28 dieser beiden Wechselschneideinsätze 16 sind relativ zueinander verdreht positioniert, sodass sich ihre Schnittwirkung wie in Figur 5 gezeigt ergänzt.

Am linksseitigen Umfangsrand 26 des Werkzeughalters 10 ist eine spiegelbildliche Anordnung der ersten Wechselschneideinsätze 16 gewählt. Allerdings sind die ersten Wechselschneideinsätze 16 am rechten und linken Umfangsrand 26 in der Gruppe der Schneideinsätze jeweils gegeneinander in Umfangsrichtung U versetzt angeordnet.

Im hier gezeigten Beispiel ist der Abschnitt der vom Innenfräser in das Werkstück 15 geschnittenen Linie zwischen den Radien im Radialschnitt gerade ausgebildet, durch eine entsprechende Anordnung und Form der zweiten Wechselschneideinsätze 18 könnten aber auch andere Formen realisiert werden.

## Patentansprüche

1. Innenfräser zur Erzeugung einer in einem Radius auslaufenden Vertiefung in einem Werkstück, insbesondere zum Fräsen einer Kurbelwelle, mit einem Werkzeughalter (10) und lösbar daran angebrachten Wechselschneideinsätzen (16, 18), wobei zur Erzeugung des Radius mehrere erste Wechselschneideinsätze (16) in Schnittrichtung (S) nacheinander angeordnet sind, die Schneidkanten (28) haben, die sich ergänzende Abschnitte des Radius erzeugen, **dadurch gekennzeichnet, dass** die ersten Wechselschneideinsätze (16) zur Erzeugung des Radius identisch ausgebildet sind.

2. Innenfräser nach Anspruch 1, **dadurch gekennzeichnet, dass** der Radius durch zwei erste Wechselschneideinsätze (16) mit sich ergänzenden Schneidkanten (28) gebildet wird.

3. Innenfräser nach einem der vorhergehenden Ansprüche, **dadurch gekennzeichnet, dass** die ersten Wechselschneideinsätze (16) scheibenförmig ausgebildet sind und mit einer ihrer Stirnseiten im Wesentlichen senkrecht zur Schnittrichtung (S) ausgerichtet sind.

4. Innenfräser nach einem der vorhergehenden Ansprüche, **dadurch gekennzeichnet, dass** der Umfang der ersten Wechselschneideinsätze (16) gerundete und gerade Umfangsabschnitte aufweist.

5. Innenfräser nach Anspruch 4, **dadurch gekennzeichnet, dass** sich gerundete und gerade Abschnitte entlang des Umfangs abwechseln.

6. Innenfräser nach Anspruch 4 oder 5, **dadurch gekennzeichnet, dass** am Werkzeughalter (10) zumindest eine Anlagefläche (30) zur Positionierung und Indexierung des Wechselschneideinsatzes (16) vorgesehen ist, insbesondere wobei die Anlagefläche (30) an einem geraden Umfangsabschnitt (29) anliegt.

7. Innenfräser nach einem der Ansprüche 4 bis 6, **dadurch gekennzeichnet, dass** die gerundeten Abschnitte eine Krümmung aufweisen, die dem zu erzeugenden Radius entspricht.

8. Innenfräser nach einem der vorhergehenden Ansprüche, **dadurch gekennzeichnet, dass** seitlich zu den ersten Wechselschneideinsätzen (16) weitere, zweite Wechselschneideinsätze (18) am Werkzeughalter (10) vorgesehen sind, um an den Radius angrenzende Abschnitte der Vertiefung in das Werkstück zu schneiden, wobei alle zweiten Wechselschneideinsätze (18) identisch ausgebildet sind.

9. Innenfräser nach einem der vorhergehenden Ansprüche, **dadurch gekennzeichnet, dass** an beiden Umfangsrändern (26) des Werkzeughaltern (10) erste Wechselschneideinsätze (16) zur Erzeugung eines Radius angeordnet sind.

10. Innenfräser nach Anspruch 9, **dadurch gekennzeichnet, dass** beide Radien identisch sind und die Gruppen von ersten Wechselschneideinsätzen (16), die den Radius erzeugt, an beiden Umfangsrändern (26) des Werkzeughalters (10) in Schnittrichtung (S) gegeneinander versetzt angeordnet sind.

11. Innenfräser nach Anspruch 8 und zusätzlich Anspruch 9 oder 10, **dadurch gekennzeichnet, dass** der Abschnitt der Vertiefung zwischen den beiden Radien nur von zweiten Wechselschneideinsätzen (18) erzeugt wird.

12. Innenfräser nach einem der vorhergehenden Ansprüche, **dadurch gekennzeichnet, dass** der Werkzeughalter (10) einen Grundkörper (14) und mehrere am Grundkörper lösbar befestigte Kassetten (22) umfasst, an denen jeweils wenigstens ein Wechselschneideinsatz (16) befestigt ist.

13. Innenfräser nach einem der vorhergehenden Ansprüche, **dadurch gekennzeichnet, dass** jeder der ersten Wechselschneideinsätze (16) an einer lösbar am Werkzeughalter (10) befestigten Kassette (22) befestigt ist.
